Europäisches Patentamt

European Patent Office

Office européen des brevets

(19)

(11) EP 0 949 577 A2

(12) **EUROPEAN PATENT APPLICATION**

(43) Date of publication:
**13.10.1999 Bulletin 1999/41**

(51) Int Cl.6: **G06K 7/12**, G06K 19/06

(21) Application number: **99302162.5**

(22) Date of filing: **19.03.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.04.1998 JP 9337698**
         **07.01.1999 JP 165299**

(71) Applicant: **Biophotonics Information Laboratories Ltd.**
**Yamagata-shi, Yamagata 990-2473 (JP)**

(72) Inventors:
  • **Chan, Kinpui, c/o Biophotonics Info. Lab., Ltd.**
    **Yamagata-shi, Yamagata 990-2473 (JP)**

• **Taguchi, Noboru,**
  **c/o Biophotonics Info. Lab., Ltd.**
  **Yamagata-shi, Yamagata 990-2473 (JP)**
• **Kanamori, Hiroji, Biophotonics Info. Lab., Ltd.**
  **Yamagata-shi, Yamagata 990-2473 (JP)**
• **Satori, Koji, c/o Biophotonics Info. Lab., Ltd.**
  **Yamagata-shi, Yamagata 990-2473 (JP)**

(74) Representative: **Mohun, Stephen John**
  **Haseltine Lake & Co.,**
  **Imperial House,**
  **15-19 Kingsway**
  **London WC2B 6UD (GB)**

(54) **Information recording medium and information reading system**

(57)    There is disclosed an information recording medium suitable for recording of secret information and an information reading system for reading information from the information recording medium. There is prepared an information recording medium in which information, that is invisible to a naked eye from an exterior, is recorded. The information recording medium involves an increment or a decrement of an amount of light of unscattered transmitted light having a wavelength identical to that of an incident light having a predetermined wavelength with respect to the incident light. An information reading apparatus adopting for example, an optical heterodyne method, is used to read information on one point of the information recording medium with a plurality of photo detectors. A plurality of received signals derived from the plurality of photo detectors are summed up for each point.

Fig.8

EP 0 949 577 A2

## Description

### BACKGROUND OF THE INVENTION

#### Field of the Invention

The present invention relates to an information recording medium suitable for recording of secret information and an information reading system for reading information from the information recording medium.

#### Description of the Prior Art

As informazation is advanced, and also diversification of information is advanced, the necessity of keeping a secret of information is diversified. Ways of information transmission through giving and taking the conventional information recording media are associated with a possibility of leakage of a secret through decipherment of the recording media by a third party. Information recorded on a paper sheet as a recording medium is visually readily recognized in its existence, and it will be visually readily understood or interpreted through decipherment of the recording medium. As a result, a secret will be readily exposed. With respect to information recorded on a recording medium suitable for recording information on a magnetic basis, a secret may be exposed by the use of a suitable magnetic head. This is a similar as to the matter of the optical disk.

From the point of view as mentioned above, it may be concluded that information recording medium, which does not apparently look like containing information, is more excellent in security, and further, such an information recording medium that even if it is apparent that information has been recorded, it is hard to read and if it is intended to compulsively read, then the information is destroyed, is more preferable.

Embodiments of the present invention aim to provide an information recording medium suitable for recording of information, which is secure, and an information reading system for reading information from such an information recording medium.

The present invention provides an information recording medium in which information, that is invisible to a naked eye from an exterior, is recorded. The information recording medium involves an increment or a decrement of an amount of light of unscattered transmitted light having a wavelength identical to that of an incident light having a predetermined wavelength with respect to the incident light.

In the above-mentioned information recording medium, it is preferable that said information recording medium is shaped as a card or a sheet.

Further, it is preferable that the information recording medium is one which offers an attenuation of 60 dB or more in the unscattered transmitted light having a wavelength identical to that of an incident light having a predetermined wavelength with respect to the incident light, and more preferably one which offers an attenuation of 80 dB or more in the unscattered transmitted light. The attenuation of 60 dB or more in the unscattered transmitted light makes it substantially impossible to read information with the naked eye. The attenuation of 80 dB or more in the unscattered transmitted light makes it completely impossible to read information with the naked eye. Thus it is possible to ensure the security of information taking into account a dispersion of the attenuation factor of the information recording medium. Alternatively, it is preferable that the information recording medium is one which offers an attenuation of 100 dB or more in the unscattered transmitted light.

In the above-mentioned information recording medium, it is preferable that information to be recorded inside said information recording medium is recorded on a share basis with a plurality of materials which are mutually different in a wavelength characteristic of an optical attenuation factor.

Further, it is preferable that said information recording medium has a layer consisting of a fluorescent material, or said information recording medium has a layer consisting of a light transmissive material, or alternatively said information recording medium has a layer in which a transmission grating is formed.

Here, the fluorescent material is to be interpreted in broad meaning, including for example, an accumulating type fluorescent material, and two-photon or multiple-photon absorption type fluorescent material.

In the event that the layer consisting of a fluorescent material is provided, information is disturbed by a fluorescence. In the event that the layer consisting of a light transmissive material is provided, the layer forms a wave guide so that internal scattered light and the like are propagated in a direction different from a course of unscattered transmitted light, whereby information is disturbed. In the event that the information recording medium has a layer in which a transmission grating is formed, a part of light passing through the transmission grating is diffracted, whereby information is disturbed. In any cases, information recorded inside the information recording medium is hard to be read, and thus it is possible to enhance the security of information.

The present invention further provides an information reading system comprising:

an information recording medium in which information, that is invisible to a naked eye from an exterior, is recorded, said information recording medium involving an increment or a decrement of an amount of light of unscattered transmitted light having a wavelength identical to that of an incident light having a predetermined wavelength with respect to the incident light;

an information reading apparatus comprising a light source for emitting lights, a photo sensor for detecting lights to generate received optical signals, and an optical system in which at least part of the lights emitted from said light source is introduced in form of a signal light to an information recording medium arrangement position at which said information recording medium is disposed, and the signal light emitted from said information recording medium is introduced to said photo sensor; and

a signal processing apparatus for restoring the information recorded on the information recording medium disposed at the information recording medium arrangement position in accordance with the received optical signals derived from said photo sensor.

In the event that the attenuation factor of an information recording medium is less than for example, 80 dB (more transmissive than the optical attenuation factor 80 dB), there is a possibility in some properties of the information recording medium other than the optical attenuation factor that while information cannot be recognized with the naked eye, the use of the sensitive camera makes it possible to recognize the information. Further, in the event that even if the attenuation factor of the information recording medium as to the incident light is larger as compared with that as to the wavelength of the visible light, the attenuation factor of the information recording medium as to the wavelength of the invisible light such as infrared ray is less than 80 dB, for example, there is a possibility that the information can be recognized in such a manner that the information recording medium is exposed with strong infrared ray and a sensitive infrared ray camera is used to read it.

In the above-mentioned information reading system, it is preferable that said optical system is an interference optical system in which the light emitted from said light source is split into a signal light passing through the information recording medium arrangement position and a reference light passing through an optical path which is different from an optical path for the signal light, and the signal light emitted from the information recording medium is superimposed on the reference light and then introduced to said photo sensor.

In the event that the attenuation factor of an information recording medium is for example, 80 dB or more, it is difficult to read information, of course, with the naked eye, also with the structure using the sensitive camera, the infrared ray camera, etc., even if the information recording medium is exposed with any strong light.

However, even in the above-mentioned situation, according to the information reading apparatus adopting the above-mentioned interference optical system, it is possible to detect a so-called unscattered light component transmitted through the information recording medium, at high speed and at high S/N ratio, in a large dynamic range, even if it suffers for example, attenuation of 100 dB or more. That is, assuming that the unscattered light component transmitted through a certain part of the information recording medium suffers attenuation of 110 dB due to the scattering or the absorption and the unscattered light component transmitted through another part of the information recording medium suffers stronger attenuation of 120 dB, or oppositely weaker attenuation of 100 dB, the difference therebetween can be detected. Of course, it is difficult to detect this difference with the naked eye. And even if the sensitive camera and the infrared ray camera are used, it is difficult to manage both the high sensitivity exceeding 120 dB and the function of extracting the unscattered transmitted light from the scattered light. Thus, there is a need to adopt the interference optical system.

In the above-mentioned information reading system, it is preferable that said interference optical system transmits onto said photo sensor a signal light of a concerned point on a passage for the signal light, on a surface or inside the information recording medium disposed at the information recording medium arrangement position, and the reference light is superimposed on said photo sensor,

said photo sensor has a plurality of photo detectors spatially arranged each independently deriving received optical signal, and
said signal processing apparatus has a signal integration unit for summing up a plurality of received optical signals derived from said photo detector array to generate a signal associated with the concerned point.

In this manner, the photo sensor should be called as a photo detector array, and is provided with a plurality of photo detectors each for generating independently received optical signal, the plurality of photo detectors independently detect a signal light from one point (concerned point), and a plurality of received optical signals, which are derived from the plurality of photo detectors, are summed up to generate a signal associated with the concerned point. This feature makes it possible to effectively suppress fluctuation of the signal due to the speckle noise, thereby reading information with excellency in S/N ratio.

In the information reading system as mentioned above, it is preferable that said information recording medium is shaped as a card or a sheet.

Further, it is preferable that the information recording medium is one which offers an attenuation of 60 dB or more in the unscattered transmitted light having a wavelength identical to that of an incident light having a predetermined wavelength with respect to the incident light, and more preferably one which offers an attenuation of 80 dB or more in the unscattered transmitted light. The attenuation of 60 dB or more in the unscattered transmitted light makes it substantially impossible to read information with the naked eye. The attenuation of 80 dB or more in the unscattered transmitted light makes it completely impossible to read information with the naked eye. Thus it is possible to ensure the security of information taking into account a dispersion of the attenuation factor of the information recording medium. Alternatively, it is preferable that the information recording medium is one which offers an attenuation of 100 dB or more in the unscattered transmitted light.

As the information, there are considered various types of information such as characters, marks, barcodes, etc., and the information is not restricted to their type. It is acceptable that the information, such as characters, marks, bar-codes, etc., is recorded with material which is different in attenuation factor in accordance with a wavelength of the used light source, and this difference is used in the form of information.

In the above-mentioned information reading system it is preferable that said information reading apparatus includes a scanning mechanism for relatively moving on a one-dimensional basis or a two-dimensional basis at least one of the information recording medium disposed at the information recording arrangement position and the signal light at the information recording arrangement position to scan the information recording medium with the signal light.

In the above-mentioned information reading system it is preferable that said information reading apparatus has a frequency shifter for relatively shifting a frequency of the signal light and a frequency of the reference light.

In the above-mentioned information reading system it is preferable that said light source emits a coherent light in which a frequency is temporally modulated, or alternatively said light source is a semiconductor laser responsive to injection of a current temporally modulated for emitting a coherent light in which a frequency is temporally modulated.

In the above-mentioned information reading system it is preferable that said information reading apparatus has an imaging optical system for imaging the concerned point on a predetermined imaging plane, an aperture disposed on the imaging plane, and a transmission optical system for transmitting lights filtered through said aperture onto said photo detector array.

In the above-mentioned information reading system it is preferable that said signal integration unit rectifies the plurality of received optical signals derived from the plurality of photo detectors constituting said photo detector array and sums up the received optical signals thus rectified.

Embodiments of the invention will now be described, by way of example only, with reference to the accompanying diagrammatical drawings in which:

Fig. 1 is an exploded perspective view of a first embodiment of an information recording medium according to the present invention.

Fig. 2 is an exploded perspective view of a second embodiment of an information recording medium according to the present invention.

Fig. 3 is an exploded perspective view of a third embodiment of an information recording medium according to the present invention.

Fig. 4 is an exploded perspective view of a fourth embodiment of an information recording medium according to the present invention.

Fig. 5 is a conceptual view of a first embodiment of an information reading system according to the present invention.

Fig. 6 is a construction view of a second embodiment of an information reading system according to the present invention.

Fig. 7 is a construction view of a third embodiment of an information reading system according to the present invention.

Fig. 8 is a construction view of a fourth embodiment of an information reading system according to the present invention.

Fig. 9 is a partially enlarged view of the fourth embodiment shown in Fig. 8.

Fig. 10 is a block diagram showing an inner constitution of a signal integration circuit shown in Fig. 8.

Figs. 11 (A), (B) and (C) are explanatory views of a signal processing method in the signal integration unit shown in Fig. 8.

Fig. 12 is a cross-sectional view showing a structure of a information recording medium used in an experiment of information reading.

Fig. 13 is a view showing an experiment result of information reading.

Fig. 14 is a construction view of a fifth embodiment of an information reading system according to the present invention.

Figs. 15(A) and 15(B) are signal waves in the fifth embodiment shown in Fig. 14.

Fig. 16 is an exploded perspective view of a fifth embodiment of an information recording medium according to the present invention.

Fig. 17 is a cross-sectional view of a sixth embodiment of an information recording medium according to the present invention.

Fig. 18 is a graph showing an example of a sensitivity characteristic of a fluorescent material.

Fig. 19 is a cross-sectional view of a seventh embodiment of an information recording medium according to the present invention.

DETAILED DESCRIPTION OF PREFERRED EMBODIMENTS

Here, there will be described an information recording medium wherein information is recorded on a medium, which is poor in light transmission usually in such an extent that it is substantially opaque, in such a recording manner that a light transmission (optical attenuation factor) is varied, and an information reading system for reading information from the information recording medium as mentioned above.

Information recording media must cause a wavelength of a light source used in reading of information in an information reading apparatus (which will be described later) a large attenuation. This attenuation is either acceptable to be an attenuation due to scattering or an attenuation due to absorption. Writing of information is performed by increasing or decreasing an attenuation factor with respect to a wavelength of a light source.

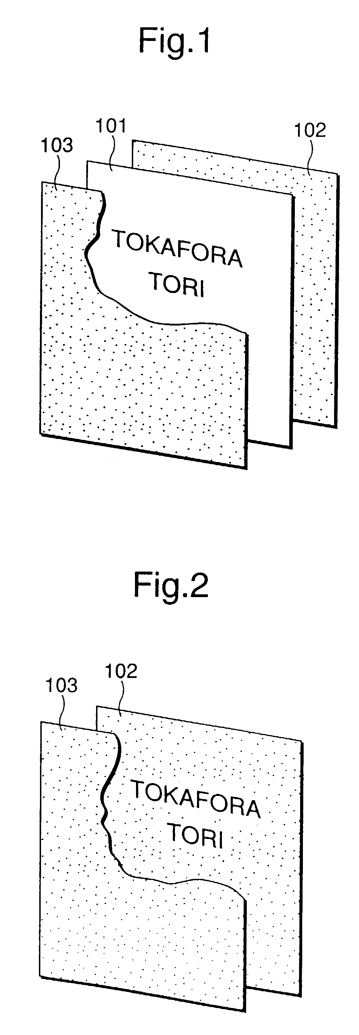

Fig. 1 is an exploded perspective view of a first embodiment of an information recording medium according to the present invention.

Information is written on a sheet of paper 101 with for example, black ink, or alternatively may be printed. Next, for example, black papers 102 and 103, which have a large optical attenuation, are pasted on both the sides of the paper 101, respectively to be integrated together. While it is possible at the stage of provision of only paper 101 to read the information with the naked eye, it is difficult at the stage of pasting black papers 102 and 103 on the paper 101 to read the information with the naked eye, even if it is exposed with strong light, owing to the large attenuation due to the two black papers 102 and 103. However, the use of the information reading apparatus (which will be described later) makes it possible to read the information through a large attenuation by the two black papers and in addition a difference in the amount of attenuation due to existence of ink marked on the paper. In the event that the paper is irradiated with a large output laser light to forcibly read the information, there is a possibility that the laser light is absorbed into the black papers and as a result they will burn. Thus, the information will disappear. Even if it is intended that paste is torn to expose a surface of the paper 101, the selection of paste having strong adhesive force will make it difficult to tear the paste. Thus, it is possible to provide an information recording medium on which a high security of information is recorded.

Fig. 2 is an exploded perspective view of a second embodiment of an information recording medium according to the present invention.

According to the second embodiment, information is written with black ink on the black paper 102 having a large optical attenuation, or alternatively may be printed. Even in this condition, the information is visually unclear through simply seeing with naked eye, and thus it is difficult to read the information. However, in view of the fact that a surface state, particularly, a reflection characteristic, of the black paper 102 is varied by the existence of ink, the black paper 103 is pasted on the black paper 102 to cover the same. This makes it difficult to read the information through seeing with the naked eye. Thus, in a same principle as the first embodiment, it is possible to provide an information recording medium on which a high security of information is recorded.

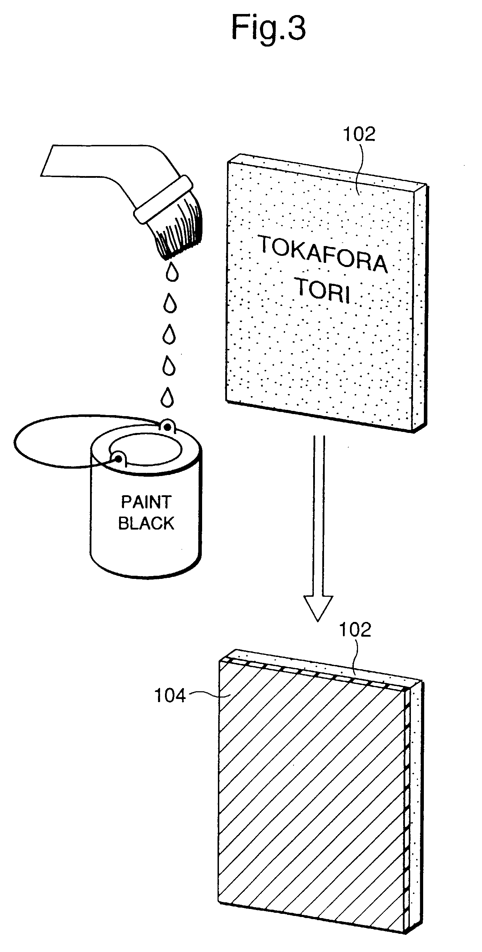

Fig. 3 is an exploded perspective view of a third embodiment of an information recording medium according to the present invention.

According to the third embodiment, information is written with black ink on the black paper 102 having a large optical attenuation, or alternatively may be printed. Next, in order to conceal the information, and also in order to make it impossible to detect a transmitted image with a usual light source, the information written with the black ink is covered completely with black paint 104. This makes it difficult to read the information through seeing with the naked eye. Thus, in a same principle as the first and second embodiments, it is possible to provide an information recording medium on which a high security of information is recorded.

In the second and third embodiments shown in Figs. 2 and 3, respectively, information is written onto the black paper 102 with black ink, or alternatively may be printed. However, it is acceptable that information is written onto the black paper 102 with a medium which causes the black paper 102 to decrease an optical attenuation (or increase light transmission), for example, such as an ink eraser. In other words, if it is possible to vary a large optical attenuation as to the black paper 102, it is acceptable that only the information portions are small in optical attenuation.

Further, with respect to the above-mentioned respective embodiments, a pasteboard onto which information is written, and one which conceals the pasteboard, are expressed in the form of the "black paper" and the "black paint". It should be noted, however, that those are typically raised by way of example of ones, which would remarkably attenuate light, for the purpose of easy understanding of the present invention, and an information recording medium of the present invention is not restricted in color and material. It is acceptable that with respect to the color, red, green, white, etc. are available, and with respect to the material, glass, plastic, liquid, etc. are available, and composite as well. Further, it is noted that the material providing an optical attenuation, which is expressed in the form of the "black paper" or the "black paint", is not restricted to a single material, and it is acceptable to use a plurality of mutually different materials in accordance with an information security needed. Here, the optical attenuation stands for an attenuation of unscattered transmitted light, and it is either acceptable that the rectilinearly propagated transmitted light is absorbed inside or attenuated by scattering. With respect to an attenuation effect for information secrecy, it is preferable to provide a layer for which it is possible to aggressively expect a scattering effect.

In this manner, in the event that a material other than paper is selected, joining or bonding of a material onto which information is written and a material for concealing the former material is not restricted to the above-mentioned paste, that is, joining by an adhesive. In case of, for example, glass and plastic, joining may be implemented in steps of fusion and deposition in a heating state, and it is also acceptable to include a step referred to as a contact bonding under pressure. In case of liquid, it is acceptable to adopt such an arrangement that a sealing material serves as a conjugation material.

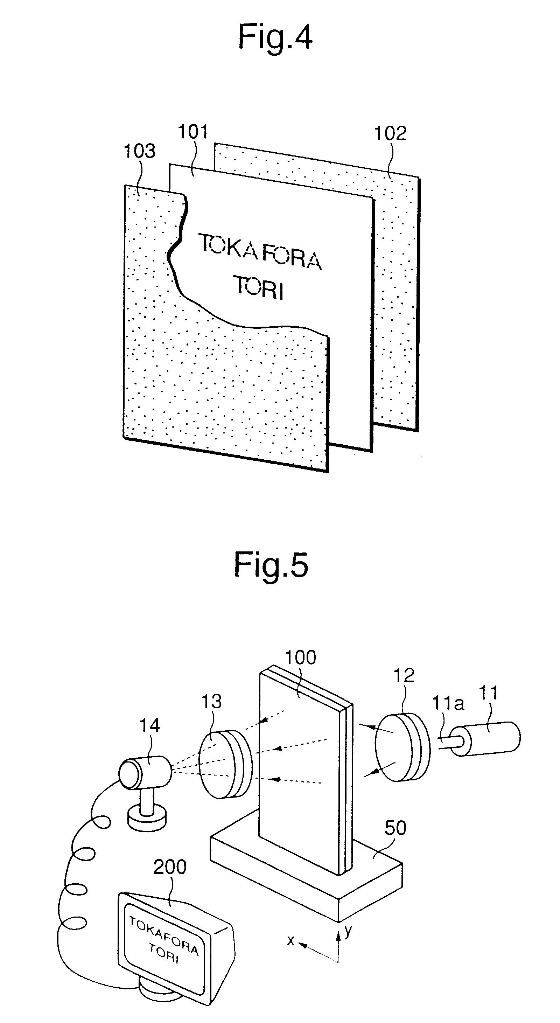

Fig. 4 is an exploded perspective view of a fourth embodiment of an information recording medium according to the present invention. There will be explained a difference between it and the first embodiment shown in Fig. 1.

An advantage of an apparatus resides in the point that a physical phenomenon is varied by a wavelength of light. The above-mentioned optical attenuation factor is varied in accordance with a variation of the wavelength regardless of a matter as to whether the attenuation is owing to absorption or scattering. Consequently, the utilization of the existence of a wavelength characteristic of an optical attenuation factor in a material corresponding to an ink for use in writing of information makes it possible to enhance the security of information as well. Information depicted with solid lines on the paper 101 in Fig. 4 is recorded with an ink material A which offers a relatively large optical attenuation factor with respect to wavelength $\lambda_1$ and a relatively small optical attenuation factor with respect to wavelength $\lambda_2$. On the other hand, information depicted with broken lines on the paper 101 is recorded with an ink material B which offers a relatively large optical attenuation factor with respect to wavelength $\lambda_2$ and a relatively small optical attenuation factor with respect to wavelength $\lambda_1$. Here, in this manner, two types of ink are alternatively used every other character so that information is recorded in the form of a sentence. In this case, even if reading is performed with the use of only a light source of $\lambda_1$, information thus obtained is incomplete. The complete information may be only read when both the light source of $\lambda_1$ and the light source of $\lambda_2$ are used to perform reading and both pieces of information are combined.

This embodiment is shown by way of example as a case capable of enhancing security of information by utilizing a wavelength-dependent optical attenuation factor of the ink material. It should be noted that information is not restricted to a character, and it is acceptable that information may be Morse Code, a bar code, and a design. With respect to an application of a wavelength characteristic of the ink material to information recording, there are many ways or schemes.

Fig. 5 is a conceptual view of a first embodiment of an information reading system according to the present invention.

In Fig. 5, a light beam 11a emitted from a light source 11 is incident onto an information recording medium 100 held by a holding stage 50 via an output optical system 12. Light transmitted through the information recording medium 100 is introduced via a photo detecting optical system 13 to a photo sensor 14. The photo sensor 14 converts the transmitted light to an electric signal. The electric signal thus obtained is supplied to a signal processing apparatus 200 in which information recorded on the information recording medium 100 is restored. In the first embodiment of the information reading system according to the present invention, an optical system of a combination of the output optical system 12 and the photo detecting optical system 13 corresponds to an example of an "optical system" referred to in the present invention, and the upper portion of the holding stage 50 corresponds to an information recording medium disposition referred to in the present invention.

One objective is to read information from an information recording medium on which information invisible to the naked eye is recorded. Even if the amount of light, with which information is invisible to the naked eye or difficult to be recognized, is provided, it is possible to detect the information by the photo sensor 14 with such an amount of light. Further, even if a transmitted light signal is of a wavelength invisible to humans, it is possible to detect the information by selecting the photo sensor. Particularly, in this case, the use of a photo sensor whose sensitivity lies in the infrared region is advantageous.

Fig. 5 shows such a manner that the beam lla emitted from the light source 11 is enlarged by the output optical system 12 and then incident onto the information recording medium 100, so that two-dimensional information is read. In view of the fact that transmitted light of an information recording medium having a large optical attenuation factor is weak, however, in order that while the beam is incident onto the information recording medium without being enlarged and the amount of transmitted light is increased, two-dimensional information is read, it is acceptable to provide means for scanning the image information recording medium by relatively moving the beam and the information recording medium, for example, in such a manner that the holder 15 is freely movable in x and y directions.

However, according to the light direct detection scheme shown in Fig. 5, the minimum light power, which the photo detector can detect, is limited by the dark current noise of the photo detector and the thermal noise of the output resistance. In the event that in order to ensure the security of an information recording medium the level of the optical attenuation factor of the information recording medium in its entirety is elevated, so that the transmitted light is further weakened, it is preferable to adopt an optical heterodyne detection method with which it is possible to expect a significant improvement in the detectable minimum light power as compared with the light direct detection scheme.

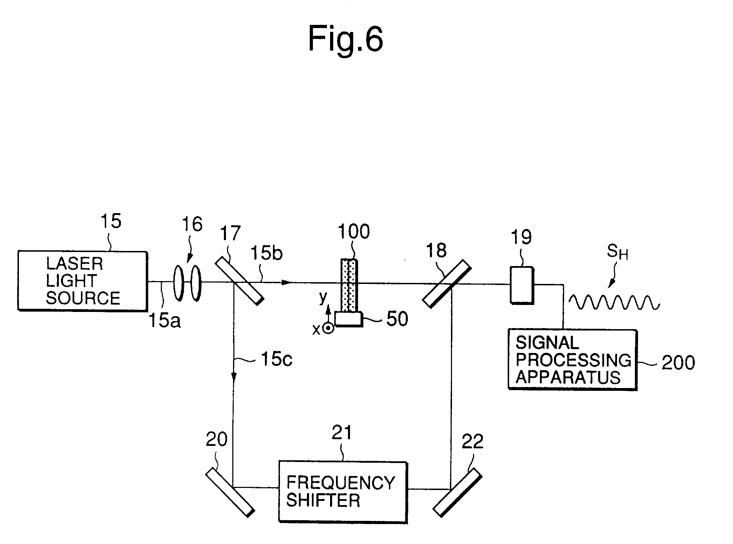

Fig. 6 is a construction view of a second embodiment of an information reading system according to the present invention. This embodiment is to adopt the optical heterodyne detection method referred to above.

A coherent laser beam 15a emitted from a laser source 15 is collimated by collimator lenses 16 to become a light beam having a predetermined beam diameter, and split by a beam splitter 17 to a signal light 15b and a reference light 15c. The signal light 15b is incident upon an information recording medium 100. The information recording medium 100 is mounted on a holding stage 50 movable in x- and y-directions which are vertical with respect to the travelling path of the signal light 15b. A signal light passed through the information recording medium 100 is incident upon a photo detector 19 via a beam splitter 18.

On the other hand, the reference light 15c separated from the signal light 15b by the beam splitter 17 is reflected by a mirror 20 and frequency-shifted by a frequency shifter 21, for example, by an AOM (acousto-optic modulator) or another frequency shifter 21, further reflected by a mirror 22, superimposed on the signal light by the beam splitter 18, and mixed with the signal light on the surface of the photo detector 19. On the photo detector 19 produced is an interference light constituted of the signal light and the reference light which are caused to differ in frequency from each other by the action of the frequency shifter 21. The output of the photo detector 21 consists of a heterodyne signal SH with a frequency which equals to the frequency difference between the signal light and the reference light. The heterodyne signal SH is fed to a signal processing apparatus 200 so that information recorded on the information recording medium is restored.

The minimum optical power, which can be detected in the form of heterodyne signal thus obtained, that is the detectable minimum signal optical power, is restricted only by ultimate shot noises caused by irradiation of the signal light onto the photo detector, but not restricted by a dark current noise of the photo detector and a thermal noise due to the output resistance, so that the minimum optical power is improved by about a factor of ten as compared with the above-mentioned light direct detection. Accordingly, it may be understood that the second embodiment of the present invention applies a sensitive characteristic of the optical heterodyne detection method.

In the information reading system shown in Fig. 6, information of one point (concerned point) of information recording medium is measured in the form of the amount of transmitted light. However, in the event that information is involved in extent on a one-dimensional basis or a two-dimensional basis, but not one point, it is possible to read one-dimensional or two-dimensional information, for example, in such a manner that by moving the holding stage 50 the information recording medium 100 is scanned on a one-dimensional basis or a two-dimensional basis so that signals on the respective concerned points are derived, and those signals are processed.

According to the information reading system shown in Fig. 6, at a certain time point, on one concerned point, a single received optical signal is derived in the form of the amount of transmitted light from a photo detector array to read information through a signal processing. However, in case of information involved in extent on a one-dimensional basis or a two-dimensional basis, if it is possible to simultaneously derive pieces of information on the respective associated positions, it will be possible to enhance a speed of information reading.

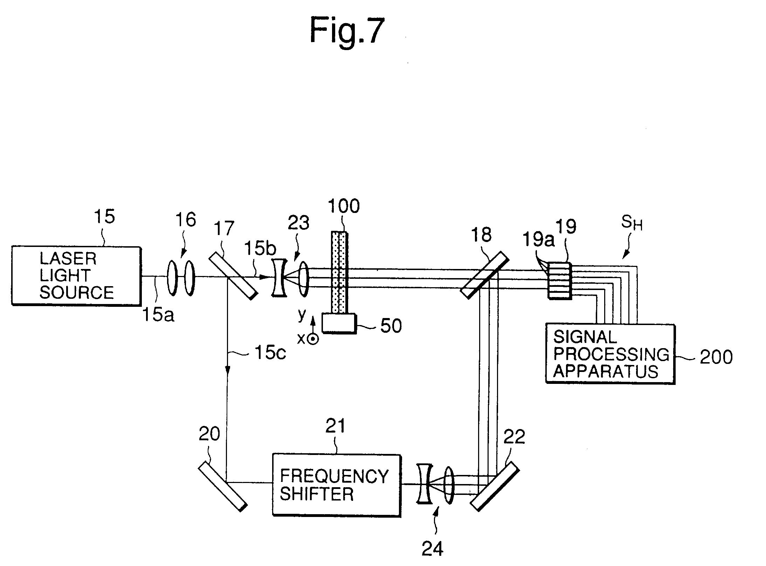

Fig. 7 is a construction view of a third embodiment of an information reading system according to the present invention, which is made in view of the foregoing.

According to the third embodiment of an information reading system according to the present invention, beam expanders 23 and 24 are used to expand the signal light 15b and the reference light 15c, respectively, and independent heterodyne signals $S_H$, which are associated with multiple concerned points, are simultaneously derived from a photo detector array 19 in which a plurality of photo detectors 19a are spatially independently arranged. This feature makes it possible to enhance a speed of information reading.

The use of such a photo detector array makes it possible to read out at high speed information disposed on a one-dimensional basis or a two-dimensional basis inside the information recording medium 100. Of course, even if such a photo detector array, which may be referred to as a compound eyes-like photo detector array, is used, it may simply cover limited length or area. Thus, in the event that an area of information recording on the information recording medium exceeds the limited area, information is read in its entirety through sequentially altering a relative position of the signal light and the information recording medium, for example, by means of moving the holding stage 50 in X direction or Y direction.

In the optical heterodyne detection method, as shown in Figs. 6 and 7, which uses a single photo detector on one point (one concerned point), increasing the optical attenuation factor of the information recording medium may be associated with a problem of a temporal fluctuation of the heterodyne signal due to its scattering.

According to the optical heterodyne detection method, as shown in Figs. 6 and 7, in the event that the information recording medium 100 is of a light scattering medium, an unscattered light component, which rectilinearly propagates without scattering, is detected in the form of a signal. On the other hand, simultaneously, a near-axis forward scattered light component as well as the unscattered light component are detected. The near-axis forward scattered light component are emitted from the information recording medium partially maintaining time coherence possessed by the incident light.

Further, these the unscattered light component and the near-axis forward scattered light component, which carry information as to the structure inside information recording medium, undergo scattering on an outgoing surface of the information recording medium and output spatially with a certain spread in the event that a surface of the information recording medium is uneven. In this manner, a spread of the signal light limits the signal light in the heterodyne detection method to a narrow visual field involved in the optical detector array. Thus, this brings about a decrease of the amount of light as to the effective signal light. Further, a random phase due to scattering at the outgoing point causes the heterodyne signal to be affected by the speckle noises, so that the heterodyne signal includes strong temporal fluctuations. In view of the foregoing, next, there will be explained an embodiment which intends to solve the problems as to the decrease of the amount of light of the effective signal light and the signal fluctuations caused by the speckle noises.

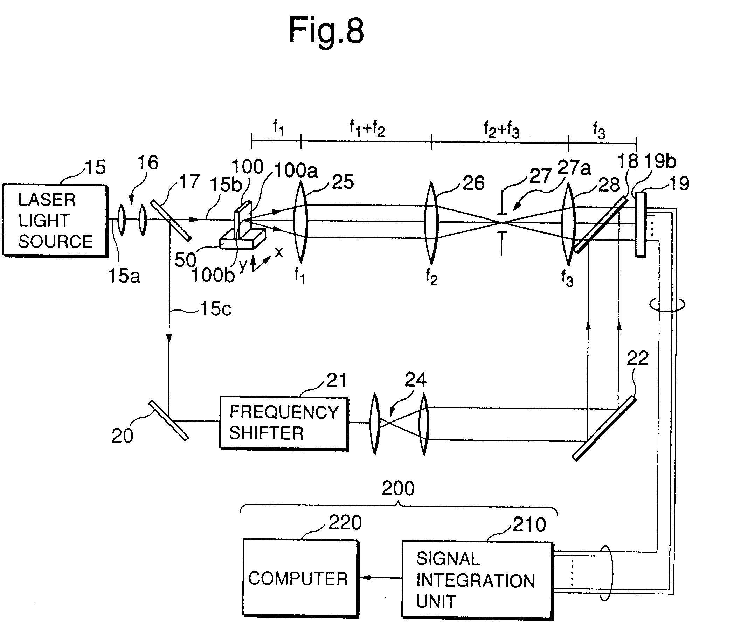

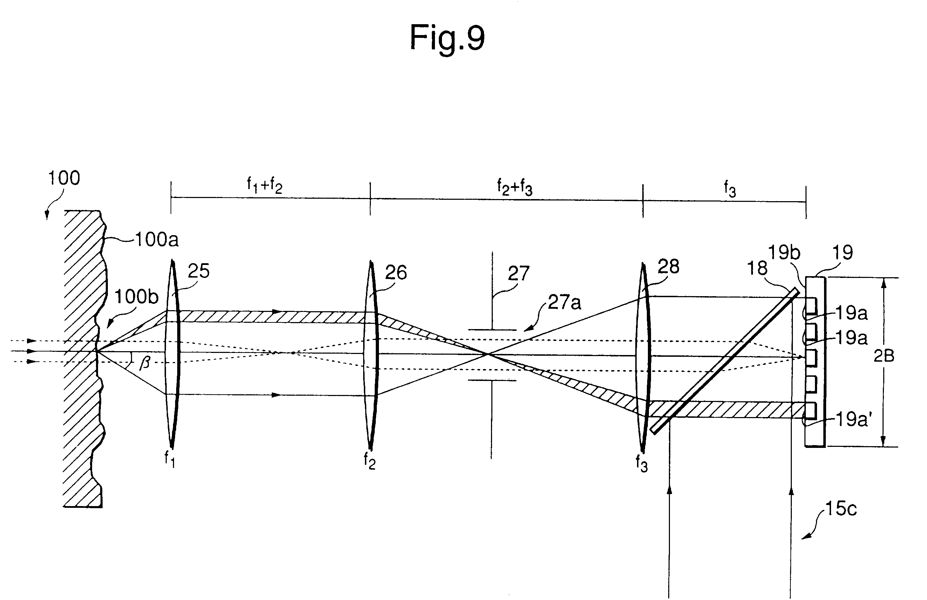

Fig. 8 is a construction view of a fourth embodiment of an information reading system according to the present invention. Fig. 9 is a partially enlarged view of the fourth embodiment shown in Fig. 8.

According to the fourth embodiment of the present invention, in a similar fashion to that of Fig. 7, there is used a photo detector array in which a plurality of photo detectors are arranged, and there is adopted a scheme in which a plurality of signals each derived from the associated photo detector are summed up to form a single data point which relates to the concerned point of the information recording medium.

A coherent laser beam 15a emitted from a laser source 15 is collimated by collimator lenses 16 to become a light beam having a predetermined beam diameter, and split by a beam splitter 17 to a signal light 15b and a reference light 15c. The signal light 15b is incident upon a information recording medium 100 which is mounted on a holding stage 50 movable in x- and y-directions. Given that it is not totally distinguished due to scattering inside the information recording medium 100, a part of the incident signal light may transmit through the information recording medium 100 without being scattered. Meanwhile, there is another component of transmitted signal light, which is absorbed or scattered inside the information recording medium 100.

Fig. 9 shows an optical path of the signal light emerging from a concerned point 100b on the optical axis of an exit surface 100a of the information recording medium 100.

The light emerging from the exit surface 100a of the information recording medium 100 is collected by a lens 28 which has a focal point on the concerned point 100b and a focal length of $f_1$, and is passed via a lens 26 which has a focal length of f2, to form an image of the exit surface 100a of the information recording medium 100 on a focal plane on which an aperture 27 is disposed.

The signal light passed through an opening 27a in the aperture 27 is passed via a lens 28 which has a focal point on the opening 27a in the aperture 27 and a focal length of $f_3$, further passed through a beam splitter 18, and then incident upon a surface 19a of a photo detector array 19.

On the other hand, the reference light 15c separated from the signal light 15b by the beam splitter 17 is reflected by a mirror 20 and frequency-shifted by a frequency shifter 21. A beam diameter of the reference light is expanded by a beam expander 24 to be equal to or larger than that of the signal light transmitted through the lens 28. Then, the reference light is reflected by a mirror 22 and superimposed on the signal light by use of the beam splitter 18. The collimated signal and reference lights are then incident upon the surface 19b of the photo detector array 19. The frequency shifter 21 may be the AOM, or it may use a phase modulator to periodically modulate the phase of the reference light relative to the signal light.

As shown in Fig. 9, on the surface 19b of the photo detector array 19 spatially arranged are multiple detector elements 19a. Because of the narrow field of view restricted by heterodyne detection, the detector elements 19a view the signal light emerging from the concerned point 100b of the information recording medium 100 through different angles, and together they determine the acceptance angle of the scattered light from the information recording medium. For example, the signal light propagated along an optical path shown by slash lines in Fig. 9 is detected by one 19a' of the detector elements 19a which constitute the photo detector array 19. In this manner, the signal lights scattered from the concerned point 100b of the information recording medium 100 in different angle are superimposed on the reference light, and they are independently detected by the detector elements of the photo detector array 19.

The multiple signal outputs from the detector elements 19a of the photo detector array 19 are transferred to a signal integration unit 210 shown in Fig. 8, and they are summed up to form a single data point which relates to the concerned point 100b. This data point is transferred to a computer 220, where, as required, data accumulation, detailed signal and/or image processing, and others are performed.

According to the present embodiment, a signal processing apparatus 200 comprises the signal integration unit 210 and the computer 220. A content of a signal processing in the signal integration unit 210 will be described later.

In the aforementioned information reading, the holding stage 21 on which the information recording medium 100 is mounted is moved in the x-direction and/or y-direction, i.e., the information recording medium 100 is moved relative to the signal light 11b. By repeating the information reading, transmission information regarding plural concerned points arranged one-dimensionally and two-dimensionally of the information recording medium 100 can be obtained.

The fourth embodiment extracts, from the signal lights scattered at the concerned point 100b of the information recording medium 100, those that can be interfered with the reference light, and detects the coherent signal components emerging from a concerned point 100b of the information recording medium 100 in all directions.

For these transmitted lights who retain partially the coherence properties of the incident beam and are capable of contributing to the heterodyne detection signals, the major coherence loss due to surface scattering on the surface 100a of the information recording medium 100 is not the temporal coherence but the spatial coherence. Therefore, in order to effectively detect those signal lights suffering from such a spatial coherence loss, it is preferable to use a photo detector array with finite element size, so that the spatial coherence loss can be compensated to a certain extent. Thus, in the event that optical attenuation and scattering properties become large, it is possible to expect remarkable improvements in signal intensity and S/N ratio.

In the present embodiment, between the lens 26 and the lens 28 disposed is the aperture 27. By reducing the diameter of the opening 27a in the aperture 27, in the similar manner as a conventional confocal microscope (refer to, for example, "Confocal Microscopy" edited by T. Wilson and published by Academic Press (London, 1990)), a high spatial resolution can be obtained irrespective of the diameter of the laser beam incident on the information recording medium 100. However, as compared to the conventional confocal optical microscope using a direct detection method, the present embodiment employs the optical heterodyne detection method, and further inventively, a photo detector array for the heterodyne detection of spatially distorted signal lights, instead of using a single detector.

For the purpose of decreasing the amount of unnecessary scattered lights reaching the photo detector array 19, the diameter of the opening 27a in the aperture 27 does not necessarily have to be reduced. The aperture diameter may be adjusted freely. This respect is also one of advantages offered by the provision of the aperture 27. If the amount of scattered lights reaching the detector array 19 is large, not only the components which simply fail to contribute to heterodyne detection but the shot noises in the optical heterodyne detection will be increased. Therefore, the unnecessary scattered lights are preferably prevented from reaching the photo detector array 19. The aperture 27 is suitable for the purpose.

Next, a content of a signal processing in the signal integration unit 210 will be described hereinafter.

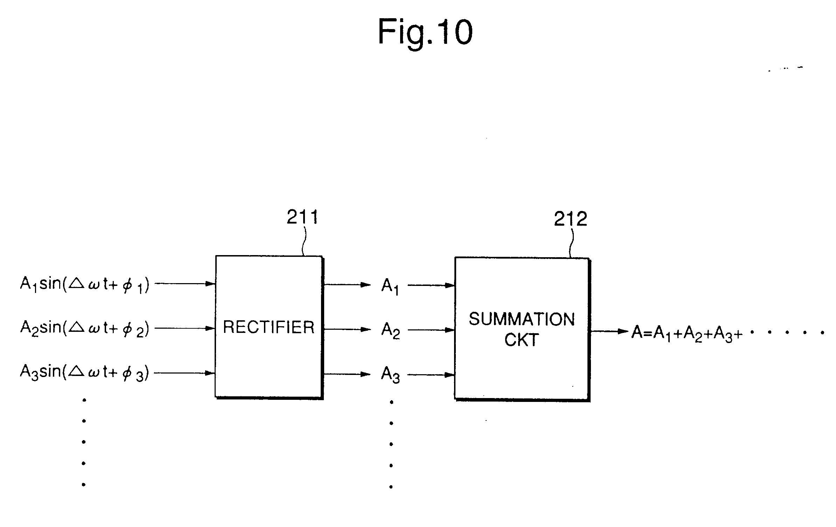

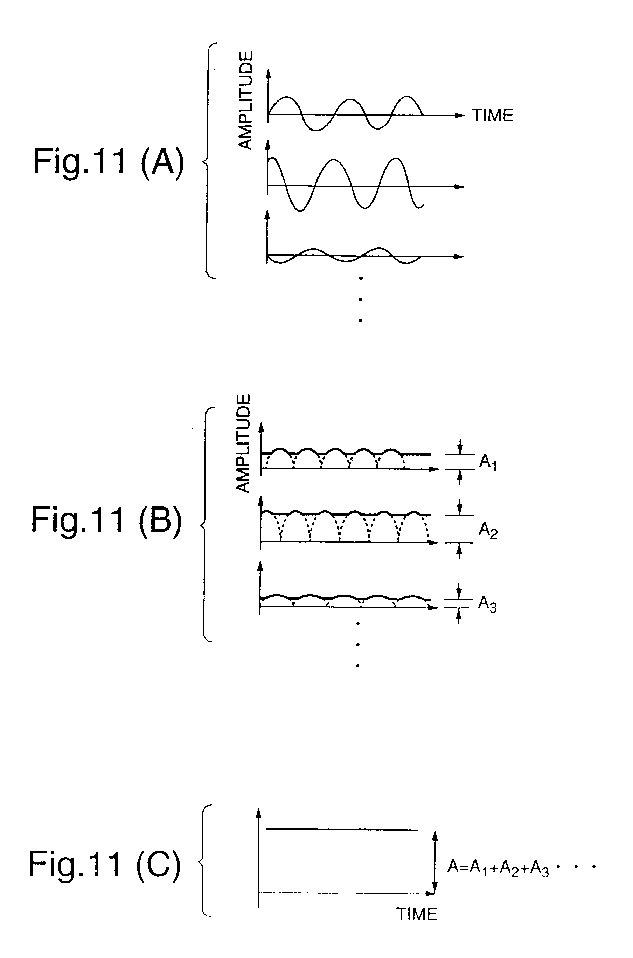

Fig. 10 is a block diagram which diagrammatically shows the constitution of the signal integration unit 210 shown in Fig. 8, and Figs. 11 (A), (B) and (C) are explanatory views of the signal processing method in the signal integration unit shown in Fig. 8.

The heterodyne signal outputs from the detector elements 19a constituting the photo detector array 19 can be given in the form

$$A_1 \sin(\Delta\omega + \phi_1)$$

$$A_2 \sin(\Delta\omega + \phi_2)$$

$$A_3 \sin(\Delta\omega + \phi_3)$$

$$\vdots$$

where $\Delta\omega = 2\pi\Delta f$ denotes a difference in angular frequencies between the signal light and the reference light; $A_1$, $A_2$, $A_3$, ... are the amplitudes of heterodyne signals; and $\phi_1$, $\phi_2$, $\phi_3$, ... are the phases of heterodyne signals. Generally, the amplitudes $A_1$, $A_2$, $A_3$, ... and the phases $\phi_1$, $\phi_2$, $\phi_3$, ..., as shown in Fig. 11A, differ from one another.

The signal integration unit 210 shown in Fig. 8 is, as shown in Fig. 10, provided with a rectifier 211 and a summation circuit 212. Plural heterodyne signals $A_1 \sin(\Delta\omega t+\phi_1)$, $A_2 \sin(\Delta\omega t+\phi_2)$, $A_3 \sin(\Delta\omega t+\phi_3)$, ... which are derived from the detector elements 19a of the photo detector array 19 are transmitted to the rectifier 211, and as shown in Fig. 11B, they are rectified and converted to direct-current (DC) signals with amplitudes proportional to the amplitudes of the heterodyne signals.

The DC signals are then inputted to the summation circuit 212 and summed up to form a DC signal $A = A_1+A_2+A_3+...$ . As such, the DC signal A is carrying the information regarding the concerned point 100b shown in Figs. 8 and 9.

By successively performing the signal processing while the holding stage 50 shown in Fig. 8, for example, in both x and y directions, a two-dimensional image data of the information recording medium 100 can be obtained.

According to the scheme shown in Fig. 8, there is no need to provide a time for averaging signals due to the speckle phenomenon, and the holding stage 50 is able to be moved at high speed in the above-mentioned x and y directions. Thus it is possible to remarkably reduce a read time of information which is two-dimensionally recorded inside the information recording medium. In the event that the whole information may be read through a measurement of optical attenuation on inherent one point of the information recording medium, of course it is acceptable that the medium does not have to be scanned and is fixed.

In the event that information is disposed on a one-dimensional basis, the simplest scanning may be of a way that an information recording medium held by a hand is translated to cross the optical path of the signal lights. In this case, when an information as to a scanning speed is required, it is acceptable that the information recording medium is moved to the holding stage to read information at a scanning speed determined by a scanning mechanism, and then the information recording medium is discharged. There may be considered a way that a feeding direction and a discharge direction are the same direction and the information recording medium entered from a feeding inlet is derived from a discharge outlet, or alternatively another way that the feeding direction and the discharge direction are opposite from one another and the feeding inlet and the discharge outlet are the same. It is a design matter whether information reading is performed in the feeding direction, that is, an insertion direction, or the discharge direction.

In view of the production technique and the design technique, it is acceptable that scanning of information recording medium is performed for the signal lights using a scanner. In this manner, with respect to scanning schemes or reading schemes on one-dimensional or two-dimensional bases, there are considered many type of schemes.

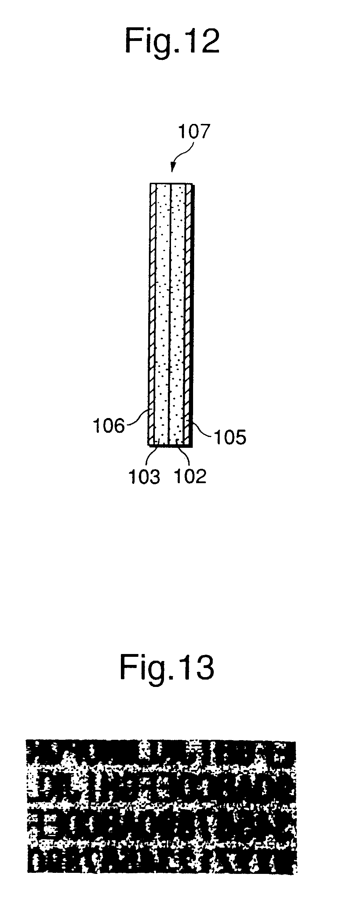

Fig. 12 is a cross-sectional view showing a structure of a information recording medium used in an experiment of information reading. Fig. 13 is a view showing an experiment result of information reading.

In this experiment, there were used the information reading apparatus shown in Fig. 8 and the signal processing apparatus adopting the processing system explained referring to Fig. 10 and Figs. 11 (A), (B) and (C).

In this experiment, in addition to the basic form of two black sheets 102 and 103 similar to that of Fig. 2, there is provided such an arrangement that the black sheets 102 and 103 are sandwiched by two frosted glasses 105 and 106 so as to enhance the security of information 107 by the light-scattering effect of those frosted glasses. This plate, which apparently looks like the frosted glasses, can be read in information, as shown in Fig. 13, through the apparatus shown in Fig. 8.

Described above are three embodiments of Figs. 6, 7 and 8 in the form of systems using the optical heterodyne detection method of the information reading system of the present invention. Here, in the embodiments using the optical heterodyne detection method, in order to generate the heterodyne signal, in other words, to provide a frequency difference between the signal light and the reference light, there is used the frequency shifter 21, for example, an AOM (acousto-optic modulator) or an EOM (electro-optic modulator). However, as a method of generating the heterodyne signal, there is another method, for example, as shown in Japanese Patent Application Serial No. Hei.9 -266504, in which instead of the use of the frequency shifter, there is used a light source for emitting a coherent light in which a frequency is temporally modulated. This method may also be applicable to any of the embodiments of Figs. 6, 7 and 8. It would be useful, particularly, in the event that it is not desired to use the expensive frequency shifter.

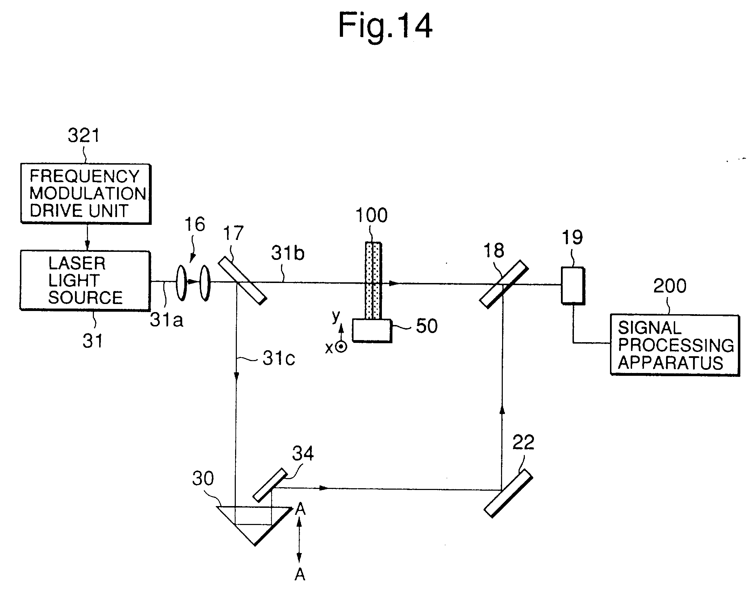

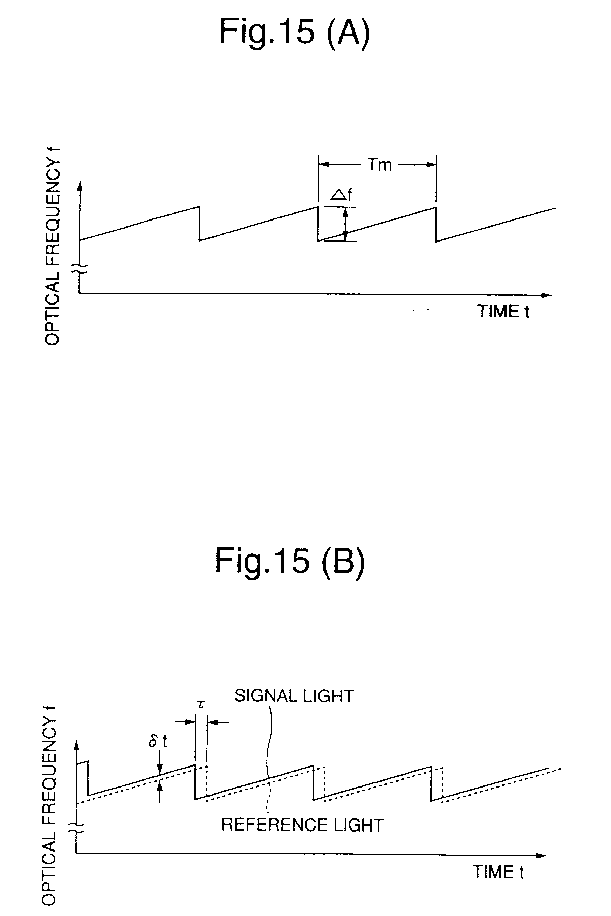

Fig. 14 is a construction view of a fifth embodiment of an information reading system according to the present invention. Figs. 15(A) and 15(B) are signal waves in the fifth embodiment shown in Fig. 14.

A laser light source 31 is driven by a frequency modulation drive unit 32 to emit a laser beam 31a, as shown in Fig. 15(A), in which an optical frequency f varies temporally as a sawtooth in period Tm. The laser beam 31a emitted from the laser light source 31 is collimated by collimator lenses 16 to become a light beam having a predetermined beam diameter, and split by a beam splitter 17 to a signal light 31b and a reference light 31c. The signal light 31b is incident upon an information recording medium 100. The information recording medium 100 is mounted on the holding stage 50 movable in x- and y-directions vertical with respect to a travelling direction of the signal light. A signal light transmitted through the information recording medium 100 is incident upon the photo detector array 19 via the beam splitter 18.

On the other hand, the reference light 31c separated from the signal light 31b by the beam splitter 17 is reflected by a total reflection prism 33, further reflected by a mirror 34, and further reflected by a mirror 22, superimposed on the signal light by the beam splitter 18, and mixed with the signal light on the surface of the photo detector 19. The total reflection prism 33 is movable in A-A directions shown in Fig. 14. A movement of the total reflection prism 33 in the A-A directions makes it possible to vary an optical path length of the reference light 31c.

In the arrangement shown in Fig. 14, providing that an optical path length of the reference light is longer than that of the signal light, and a difference in optical path length is expressed by $\Delta d$, there will occur a frequency difference $\delta f$, as shown in Fig. 15(B), owing to a light propagation time difference $\Delta t = \Delta d/c$ (c : light velocity) on two light beams arriving to the photo detector array 19.

That is, as shown in Fig. 15(B), frequency $f_S$ of the signal light in the vicinity of the trailing edge of a sawtooth-like shape of frequency modulation, except for the component of time width $\tau$, is higher than frequency $f_T$ of the reference light by

$$f_S - f_T = \delta f = f'\Delta t = (\Delta f/Tm) \cdot (\Delta d/c)$$

In this manner, the photo detector array 19 can detect the heterodyne signal having the heterodyne frequency $\delta f$, which is in proportion to the product of the frequency sweep width $\Delta f$ and the optical path length difference $\Delta d$, with respect to the time width Tm - $\tau$.

Consequently, the selection of the frequency sweep width $\Delta f$ and the optical path length difference $\Delta d$ makes it possible to generate a desired heterodyne signal without the use of the frequency shifter 21 (cf. Figs. 6 - 8). In the signal processing apparatus 200 shown in Fig. 14, by extracting signal components relating to the heterodyne frequency, it is possible to detect the transmission rate of the unscattered light component transmitted through the concerned point of the information recording medium in accordance with the magnification of the signal thus extracted.

As the simplest example of implementing the frequency modulation laser, it is possible to raise a scheme in which an injection current of a semiconductor laser is varied for a modulation of the direct frequency. There is reported such an example that varying an injection current of a semiconductor laser of wavelength 1.06 $\mu$m makes it possible to obtain a modulation rate of about 300G Hz/m sec. (cf. Japanese Patent Application Hei. 9-266504).

As mentioned above, the use of the frequency modulation laser instead of the frequency shifter 21 in the embodiment of Fig. 6 makes it possible to reduce the cost of the information reading apparatus. In a similar fashion to this way, the frequency modulation laser can be applied to the embodiments of Figs. 7 and 8, and thus it is possible to implement the information reading apparatus according to the optical heterodyne detection method using no frequency shifter 21.

As described above, the information reading apparatus according to the light direct detection method has been explained referring to Fig. 5, and the information reading apparatus according to the optical heterodyne detection methods have been explained referring to Figs. 6, 7, 8 and 14. As described above, according to the light direct detection method, it is applicable to an information recording medium in which the optical attenuation characteristic is within some degree, for example, 80 dB. When the optical attenuation exceeds the some degree, it is obliged to adopt the optical heterodyne detection method instead of the light direct detection method. Also as described above, according to the optical heterodyne detection method, the photo detector array is provided with multiple photo detectors. In order to determine a signal of one point of the concerned point, multiple signals generated from the multiple photo detectors are summed up. This scheme is suitably applicable to the information recording medium involved in the largest optical attenuation.

However, even if the optical heterodyne detection method is adopted, it is of course easier for the signal processing that the smaller optical attenuation (higher light transmission) of the information recording medium is concerned. In this case, under an operation that information is read in accordance with the light direct detection method which is technically simple, it is desired to secure a certain level of information security through a camouflage for information. Next, there will be described embodiments of information recording medium based on this concept.

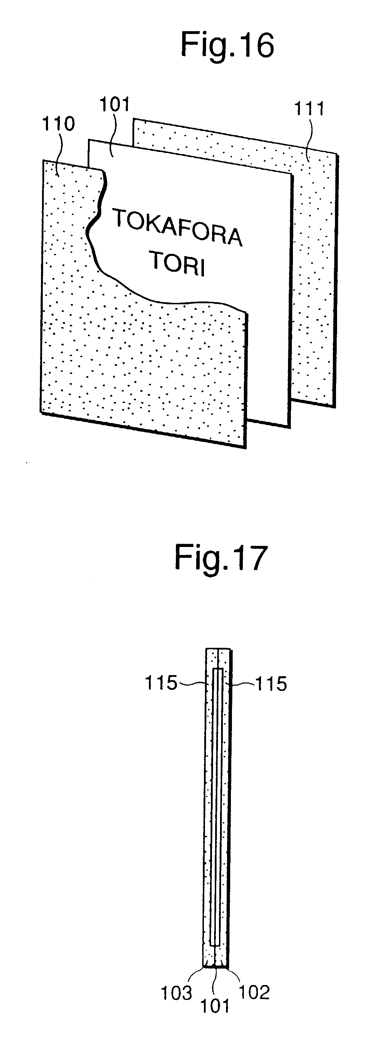

Fig. 16 is an exploded perspective view of a fifth embodiment of an information recording medium according to the present invention.

In Fig. 16, written on the paper 101 is information with an ink of a material in which an absorption is large in the vicinity of a certain wavelength $\lambda_0$. The paper 101 is sandwiched by information covering materials 110 and 111 which offer high scattering properties or high light absorption properties in the visible light range. At least one of the information covering materials 110 and 111 includes a material which absorbs wavelength near the wavelength $\lambda_0$ and generates fluorescence, or alternatively is painted with such a material.

In the event that information recorded inside the information recording medium is read, light of wavelength $\lambda_0$ is irradiated onto the information recording medium to detect information in the form of an addition of optical attenuation to the background-related optical attenuation on the information covering materials. In case of the information recording medium using the fluorescent material shown in Fig. 16, when the information recording medium is irradiated by the light of wavelength $\lambda_0$, the irradiated portion is illuminated with the fluorescence. In this state, even if it is intended that the light direct detection method explained referring to Fig. 5 is applied to read the information, the usual sensitive camera simply catches the information recording medium illuminating in its entirety, and cannot read the information hiding in the fluorescence. However, according to the information reading apparatus using, for example, the optical heterodyne detection methods explained referring to Figs. 6, 7, 8 and 14, it is possible to detect light in accordance with the optical heterodyne signal based on the interference phenomenon between the signal light and the reference light owing to light of wavelength $\lambda_0$ transmitted through generation of fluorescence. This is independent of fluorescence.

Fig. 17 is a cross-sectional view of a sixth embodiment of an information recording medium according to the present invention.

According to the embodiment shown in Fig. 16, the information covering materials 110 and 111 includes a fluorescent material, or alternatively is painted with such a material. Whereas, according to the embodiment shown in Fig. 17, the paper 101 is painted with a fluorescent material 115 per se, and is sandwiched by information covering materials 102 and 103 which include no fluorescent material. In this manner, there are considered various modifications with respect to a case where the fluorescent material is used.

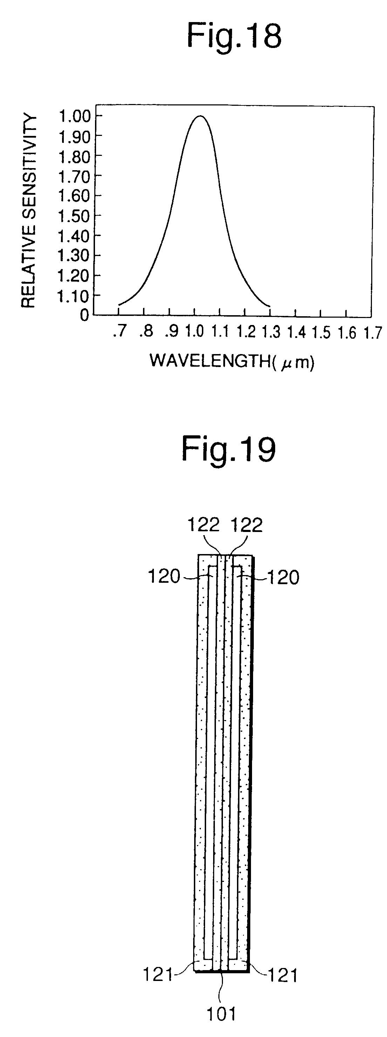

Fig. 18 is a graph showing an example of a sensitivity characteristic of a fluorescent material.

As the fluorescent material, it may be considered to use one having the sensitivity characteristic shown in Fig. 18, which is available in the market, for example, as products of Kodak Co., Ltd., that is, an infrared detection target. When infrared rays of 0.7 - 1.3 μm are applied to such a fluorescent material, it is converted into rays of a visible light range from orange to red. In the event that information reading is performed in accordance with an optical direct detection method in which as the light source a YAG laser of wavelength 1.06μm is used and as the photo sensor a CCD camera is used, it is difficult for the CCD camera to detect information since the information hides in luminance by rays emission of this visible light range.

While the term "fluorescence" has been used in the above description, the fluorescence referred to here is representative of the photo-luminescence in broad meaning. The fluorescent material, as shown in Fig. 18 by way of example, which emits rays of a visible light range upon application of the infrared rays, may be an accumulation type of fluorescence in which as to the excitation a preliminary excitation state is accumulated with a light of a fluorescent lamp or an indoor lamp for white light, particularly a light in range from blue to green, and then infrared rays are applied to accelerate the excitation, so that the fluorescence in visible area is generated. In some materials, they may take a rays emission mechanism such as a two-photon absorption in which an excitation is accelerated by two photons so that the fluorescence in visible area is generated, and a multiple-photon absorption mechanism as well. Of course, there is one taking a usual fluorescent light emission mechanism in which the fluorescence in visible area is generated by irradiation light of the short-wave without a step of the accumulation. It is to be noted that the fluorescence referred to in the present invention includes the photo-luminescence in these broad meaning.

In this manner, the use of the fluorescent material for example makes it possible to distinguish an information reading apparatus according to the optical heterodyne detection method and an information reading apparatus according to the light direct detection method. It is acceptable that information is recorded with fluorescent material per se.

As described above, for the light direct detection method, information camouflage by a fluorescent material makes it possible to ensure superiority over the ability of reading according to the optical heterodyne detection method. For the purpose of distinction between the light direct detection method and the optical heterodyne detection method, it is acceptable that the scattered light inside the information recording medium is scattered in a direction perpendicular to that of the unscattered light by guiding with a layer consisting of transparent material.

Fig. 19 is a cross-sectional view of a seventh embodiment of an information recording medium according to the present invention.

A brightness signal, which is generated in accordance with information recorded on the paper 101, is scattered by scattering bars 122 between which the paper 101 is put, and is introduced to transparent film layers 120. An unscattered light component passes through the transparent film layers 120. Whereas a scattered light component is incident upon the transparent film layers 120 with a certain angle with respect to the transparent film layers 120 but not a right angle. With respect to the incident angle and the refractive index of the transparent film layers 120, if these factors satisfy the condition that the scattered light component is repeated in total reflection and scattered within the transparent film layers 120, the scattered light component is diffused inside the information recording medium in the form that light is guided by the transparent film layers 120. Even if the scattered light component is propagated into scattering bars 121 after diffusion, the scattered light component is radiated from the information recording medium at the place different from the unscattered light component. Thus, the scattered light component is emitted independently of the brightness signal carrying information.

In this manner, even if it is intended that the light direct detection method is adopted to read information, light applied to the information recording medium will camouflage the brightness signal carrying the information emerged from the information recording medium in its entirety. However, an adoption of the optical heterodyne detection method makes it possible to selectively the unscattered light component by interference with the reference light, thereby overcoming the influence due to the diffusion effect and performing the information detection.

In order to effectively introduce the scattered light to the transparent file layers, or in order to bring about further scattering of the scattered light, it is acceptable to adopt the scattering bars 122 or the transparent film layers 120 in which a transmission grating is formed. In this case, the grating also serves to diffuse light inside the information recording medium thereby camouflage information. It is also preferable that each of the scattering bars 122 consists of the above-mentioned fluorescent material.

As mentioned above, according to the present invention it is possible to provide an information recording medium suitable for recording of secret information and an information reading system for reading information from the information recording medium.

While the present invention has been described with reference to the particular illustrative embodiments, it is not to be restricted by those embodiments but only by the appended claims. It is to be appreciated that those skilled in the art can change or modify the embodiments without departing from the scope of the present invention.

**Claims**

1. An information recording medium in which information, that is invisible to an external naked eye, is recorded, said information recording medium involving an increment or a decrement of an amount of light, of unscattered transmitted light having a wavelength identical to that of an incident light,having a predetermined wavelength with respect to the incident light.

2. An information recording medium according to claim 1, wherein said information recording medium is shaped as a card or a sheet, and offers an attenuation of 60 dB or more in the unscattered transmitted light having a wavelength identical to that of an incident light having a predetermined wavelength with respect to the incident light.

3. An information recording medium according to claim 1, wherein information to be recorded inside said information recording medium is recorded on a share basis with a plurality of materials which are mutually different in a wavelength characteristic of an optical attenuation factor.

4. An information recording medium according to claim 1, wherein said information recording medium has a layer consisting of a fluorescent material.

5. An information recording medium according to claim 1, wherein said information recording medium has a layer consisting of a light transparent material.

6. An information recording medium according to claim 1, wherein said information recording medium has a layer in which a transmission grating is formed.

7. An information reading system comprising:

an information recording medium in which information, that is invisible to a naked eye from an exterior, is recorded, said information recording medium involving an increment or a decrement of an amount of light of unscattered transmitted light having a wavelength identical to that of an incident light having a predetermined wavelength with respect to the incident light;
an information reading apparatus comprising a light source for emitting light, a photo sensor for detecting light to generate received optical signal, and an optical system in which at least part of the light emitted from said light source is introduced in form of a signal light to an information recording medium arrangement position at which said information recording medium is disposed, and the signal light emitted from said information recording medium is introduced to said photo sensor, and
a signal processing apparatus for restoring the information recorded on the information recording medium disposed at the information recording medium arrangement position in accordance with the received optical signal derived from said photo sensor.

8. An information reading system according to claim 7, wherein said optical system is an interference optical system in which the light emitted from said light source is split into a signal light passing through the information recording medium arrangement position and a reference light passing through an optical path which is different from an optical path for the signal light, and the signal light emitted from the information recording medium is superimposed on the reference light and then introduced to said photo sensor or a photo detector.

9. An information reading system according to claim 8, wherein said interference optical system transmits onto a photo detector array a signal light of a concerned point on a passage for the signal light, on a surface or inside the information recording medium disposed at the information recording medium arrangement position, and the reference light is superimposed on said photo detector array,

said photo detector array has a plurality of photo detectors spatially arranged each independently deriving received optical signal, and said signal processing apparatus has a signal integration unit for summing up a plurality of received optical signals derived from said photo detector array to generate a signal associated with the concerned point.

10. An information reading system according to any of claims 7 to 9, wherein said information recording medium is shaped as a card or a sheet, and offers an attenuation of 60 dB or more in unscattered transmitted light with respect to an incident light which is emitted from said light source and is incident upon the information recording medium.

11. An information reading system according to any of claims 7 to 9, wherein said information reading apparatus includes a scanning mechanism for relatively moving on a one-dimensional basis or a two-dimensional basis at least one of the information recording medium disposed at the information recording arrangement position and the signal light at the information recording arrangement position to scan the information recording medium with the signal light.

12. An information reading system according to claim 8 or claim 9, wherein said information reading apparatus has a frequency shifter for relatively shifting a frequency of the signal light and a frequency of the reference light.

13. An information reading system according to claim 8 or claim 9, wherein said light source emits a coherent light in which a frequency is temporally modulated.

14. An information reading system according to claim 8 or claim 9, wherein said light source is a semiconductor laser responsive to injection of a current temporally modulated for emitting a coherent light in which a frequency is temporally modulated.

15. An information reading system according to claim 9, wherein said information reading apparatus has an imaging optical system for imaging the concerned point on a predetermined imaging plane, an aperture disposed on the imaging plane, and a transmission optical system for transmitting light filtered through said aperture onto said photo detector array.

16. An information reading system according to claim 9, wherein said signal integration unit rectifies the plurality of received optical signals derived from the plurality of photo detectors constituting said photo detector array and sums up the received optical signals thus rectified.

# Fig.1

# Fig.2

# Fig.3

TOKAFORA
TORI

102

PAINT
BLACK

102

104

# Fig.4

# Fig.5

# Fig.6

EP 0 949 577 A2

# Fig.7

EP 0 949 577 A2

# Fig.8

EP 0 949 577 A2

# Fig.9

EP 0 949 577 A2

# Fig.10

$A_1\sin(\triangle\omega t+\phi_1)$ → RECTIFIER 211 → $A_1$ → SUMMATION CKT 212 → $A=A_1+A_2+A_3+\cdots\cdots$

$A_2\sin(\triangle\omega t+\phi_2)$ → → $A_2$ →

$A_3\sin(\triangle\omega t+\phi_3)$ → → $A_3$ →

Fig.11 (A)

Fig.11 (B)

Fig.11 (C)

$A = A_1 + A_2 + A_3 \cdots$

# Fig.12

107

106

105

103 102

# Fig.13

# Fig.14

EP 0 949 577 A2

321

FREQUENCY
MODULATION
DRIVE UNIT

LASER
LIGHT
SOURCE

16    17    31b    100    18    19

31a

31    31c    50    y    x⊙

200

SIGNAL
PROCESSING
APPARATUS

34    22

30    A

A

# Fig.15 (A)

# Fig.15 (B)

# Fig.16

TOKAFORA
TORI

# Fig.17

115 ⌐ ⌐115

103 ( 102
101

# Fig.18

# Fig.19